# EUROPEAN PATENT SPECIFICATION

(11) **EP 2 850 291 B1**
(45) Date of publication and mention of the grant of the patent: **07.09.2016**
(21) Application number: 13736643.1
(22) Date of filing: 15.05.2013
(51) Int. Cl.: F01K 23/10, F22B 37/50

(54) **COMBINED CYCLE PLANT FOR ENERGY PRODUCTION AND METHOD FOR OPERATING SAID PLANT**
KOMBIKRAFTWERK ZUR ENERGIEERZEUGUNG UND VERFAHREN ZUM BETRIEB DES BESAGTEN KRAFTWERKS
CENTRALE COMBINÉE POUR PRODUCTION D'ÉNERGIE ET PROCÉDÉ DE FONCTIONNEMENT DE LADITE CENTRALE

(30) Priority: 15.05.2012 IT MI20120837
(43) Date of publication of application: 25.03.2015
(73) Proprietor: Ansaldo Energia S.p.A., Genova (IT)
(72) Inventor: PRATICO', Ferdinando, I-16145 Genova (IT)
(74) Representative: Andreotti, Erika
(86) International application number: PCT/IB2013/053985
(87) International publication number: WO 2013/171698

(56) References cited:
- EP-A1- 1 921 281
- DE-A1- 3 419 560
- DE-A1- 4 134 686
- US-A- 4 387 577
- US-A1- 2009 165 460

## Description

### TECHNICAL FIELD

The present invention relates to a combined cycle plant for energy production and a method for operating said plant.

In particular, the present invention relates to a plant for the production of electricity or for the production of electricity and thermal energy.

### BACKGROUND ART

Generally, a combined cycle plant for energy production comprises a gas-fired turbine unit, a boiler supplied with exhaust gas from the gas turbine unit and configured to produce steam to be supplied to an operating unit, for example a steam turbine unit. The boiler comprises at least a first evaporator at a first pressure level and at least a second evaporator at a second pressure level lower than the first pressure level.

Plants of the known type are often provided with a draining circuit configured to drain the tainted water from the first evaporator and/or from the second evaporator to control the salt content in the water present in the evaporators.

The quantity of tainted water drained from each evaporator to be analysed (equal to a maximum 5% of the water flow rate supplying the respective evaporator) is then sent to a rapid evaporation tank, also called a "flash tank", the term which will be used hereunder. The flash tank is configured to produce steam and to reduce the water to atmospheric pressure. The steam produced is released into the atmosphere by means of a silencer, while the liquid portion remaining in the flash tank is drained, cooled and then discharged into a sump.

In plants of this type, therefore, the thermal energy associated with the water drained from the evaporators is dissipated.

Document US 2009/0165460 A1 discloses a steam power plant comprising a draining circuit for draining tainted water from the evaporator and returning it to the condenser of the plant.

### DISCLOSURE OF INVENTION

The object of the present invention is therefore realising a combined cycle plant for energy production which avoids the problems of the prior art indicated here; in particular, one object of the invention is realising a combined cycle plant for energy production characterised by better performance with respect to the performance of the plants of the prior art.

In particular, an object of the present invention is increasing the efficiency of the plant by increasing the power supplied with the same consumption.

In accordance with these objects, the present invention relates to a combined cycle plant for energy production according to claim 1.

A further object of the present invention is providing a method for operating a combined cycle plant for energy production which is capable of increasing plant efficiency by increasing the energy supplied with the same consumption.

In accordance with these objects, the present invention relates to a method for operating a combined cycle plant for energy production according to claim 12.

### BRIEF DESCRIPTION OF THE DRAWINGS

Further characteristics and advantages of the present invention will become apparent from the following non-limiting description of an embodiment, with reference to the figures of the appended drawings, wherein:
- Figure 1 is a schematic representation of the combined cycle plant for energy production according to the present invention;
- Figure 2 is a schematic representation of the combined cycle plant for energy production according to a second embodiment.

### BEST MODE FOR CARRYING OUT THE INVENTION

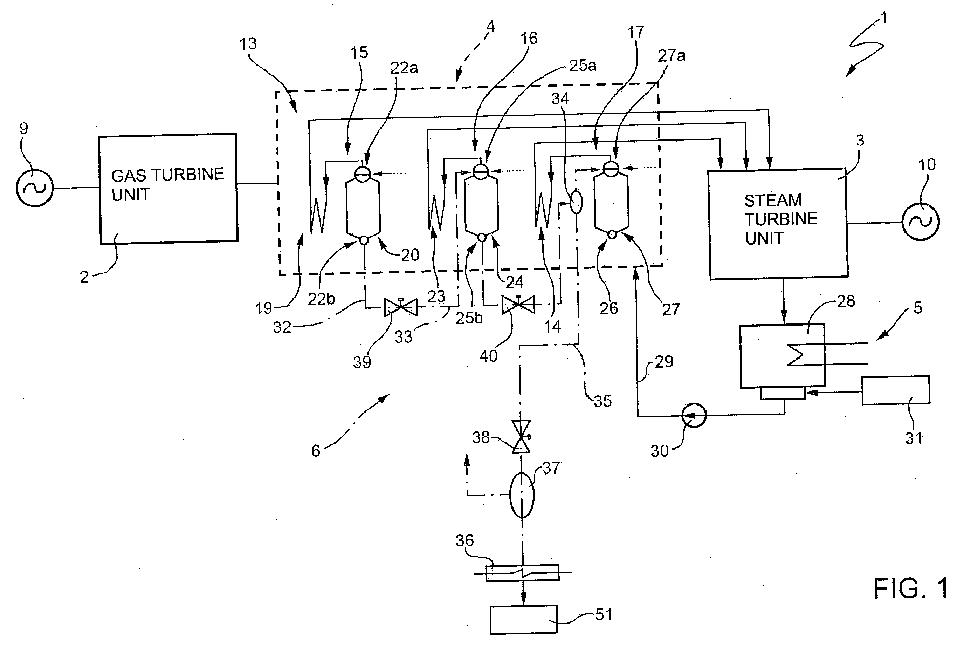

In figure 1, the number 1 denotes a combined cycle plant for energy production.

The plant 1 shown in figure 1 is preferably configured to produce electricity only.

A variant (not shown) envisages the plant 1 being configured for the production of electricity and/or thermal energy, useful, for example, in district heating applications.

The plant 1 comprises a gas turbine unit 2, an operating unit 3, a boiler 4, a condenser assembly 5 and a draining circuit 6.

The gas turbine unit 2 is the first motor of the combined cycle plant 1 and may be powered with any fuel.

The gas turbine unit 2 is connected to a generator 9 and comprises a compressor, a combustion chamber and a gas turbine (not shown in the appended figures). The gas turbine controls the generator 9 to produce available electricity.

An operating unit 3 is configured to use the steam generated by the boiler 4. For example, the operating unit may be a chemical plant or any plant capable of using the steam produced by the boiler 4.

In the non-limiting example described and illustrated here, the operating unit 3 is a steam turbine unit.

The steam turbine unit 3 is coupled to a respective generator 10 and comprises a high-pressure steam turbine, a medium-pressure steam turbine, a low-pressure steam turbine (not illustrated in the appended figures, for simplicity's sake).

The boiler 4 recovers the residual heat of the combustion flue gases produced by the gas turbine unit 2 and produces steam to be supplied to the operating unit 3.

In particular, the boiler 4 comprises a flue gas chamber 13, into which the exhaust gases of the gas turbine unit 2 flow, and a steam circuit 14 (illustrated solely in part in the appended figures, for simplicity's sake), supplied with demineralised water.

The steam circuit 14 extends inside the flue gas chamber 13, so as to use the heat of the hot flue gases coming from the gas turbine unit 2 to produce the steam to supply to the steam turbine unit 3.

In particular, in the example shown, the steam circuit 14 comprises a high-pressure section 15, a medium-pressure section 16 and a low-pressure section 17.

The high-pressure section 15 comprises a plurality of high-pressure thermal exchange banks 19 (only one shown in the appended figures, for simplicity's sake), a high-pressure evaporator 20 and a desuperheater (not shown in the appended figures, for simplicity's sake), which intervenes when the steam temperatures are too high. The high-pressure evaporator 22 is equipped with an inlet 22a and an outlet 22b. The tainted and salt-rich water flows into the outlet 22b.

The steam produced in the high-pressure section 15 is sent to the high-pressure turbine of the operating unit 3.

The medium-pressure section 16 comprises a plurality of medium-pressure thermal exchange banks 23 (only one shown in the appended figures, for simplicity's sake), a medium-pressure evaporator 24 and a desuperheater (not shown in the appended figures, for simplicity's sake), which intervenes when the steam temperatures are too high. The medium-pressure evaporator 24 is equipped with an inlet 25a and an outlet 25b. The tainted and salt-rich water flows into the outlet 25b.

The steam produced in the medium-pressure section 16 is sent to the medium-pressure turbine of the operating unit 3.

The low-pressure section 17 comprises a plurality of low-pressure thermal exchange banks 26 (only one shown in the appended figures, for simplicity's sake), a low-pressure evaporator 27. The low-pressure evaporator is equipped with an inlet 27a.

The steam produced in the low-pressure section 17 is sent to the low-pressure turbine of the operating unit 3.

The low-pressure section 17, the medium-pressure section 16 and the high-pressure section 15 are also connected to each other by means of conduits, not shown in the appended figures for simplicity's sake.

The condenser assembly 5 is configured to produce condensate from the steam arriving from the operating unit 3 and to supply the steam circuit 14 with water. The condenser assembly 5 comprises a condenser 28, a delivery branch 29, which connects the condenser 28 to the boiler 4 and a pump 30, configured to extract the condensate from the condenser 28. The condenser assembly 5 is also equipped with a water integration circuit 31, which is configured to supplement the quantity of water coming from the condenser 28 with demineralised water. The quantity of water introduced by means of the integration circuit 31 is at least equal to the quantity of water dispersed by means of the draining circuit 6, as shall be seen in detail below.

The draining circuit 6 is configured to drain the water from the high-pressure evaporator 20 and/or from the medium-pressure evaporator 24, so as to be able to conduct analysis of composition of the water circulating in said evaporators.

In particular, the draining circuit 6 is configured to recover the thermal energy of the drained water, so as to make it reusable directly inside the steam circuit 14.

The draining circuit 6 (represented with a dashed-dotted line) comprises a first draining branch 32, a second draining branch 33, a flash tank 34, an exhaust conduit 35, a heat exchanger 36, a flash tank 37 and a regulating valve 38.

The first draining branch 32 connects the outlet 22b of the high-pressure evaporator 20 with the inlet 25a of the medium-pressure evaporator 24 and is equipped with a regulating valve 39. The first draining branch is preferably connected to an analysing device (not shown in the appended figures), configured to analyse the composition of the water circulating in said evaporators.

Preferably, the first draining branch 32 drains around 1% of the water circulating in the high-pressure evaporator 20.

In conditions of saturation and at normal operating pressure of the high-pressure evaporator 20 (between 80 and 140 bar and preferably 126 bar), the tainted water drained from the high-pressure evaporator 20 undergoes a reduction in pressure during passage through the regulating valve 39. The pressure of the tainted water is, in fact, reduced to the pressure value present in the medium-pressure evaporator 24 (between 20 and 40 bar and preferably 33 bar).

The pressure drop undergone by the tainted water during passage through the regulating valve 39 causes rapid evaporation of the tainted water. In other words, the tainted water undergoes the so-called "flash" process and is converted partly into saturated dry steam at the pressure present in the medium-pressure evaporator 24 and partly into saturated water at the pressure present in the medium-pressure evaporator 24.

The quantity of steam which is produced during passage through the regulating valve 39 increases the steam flow rate which develops in the medium-pressure evaporator 24. In this manner, the power produced by the operating unit 3 increases with the same consumption.

The second draining branch 33 connects the outlet 25b of the medium-pressure evaporator 24 with the inlet 27a of the low-pressure evaporator 27 and is equipped with a regulating valve 40.

A flash tank 34 is arranged along the second draining branch 33. In particular, the flash tank 34 is arranged downstream of the regulating valve 40.

Preferably, the second draining branch 33 drains around 1% of the water circulating in the medium-pressure evaporator 24.

The second draining branch is preferably connected to an analysis device (not shown in the appended figures), configured to analyse the composition of the water circulating in said evaporators.

In conditions of saturation and at normal operating pressure of the medium-pressure evaporator 24 (between 20 and 40 bar and preferably 33 bar), the tainted water drained from the medium-pressure evaporator 24 undergoes a reduction in pressure during passage through the regulating valve 40. The pressure of the tainted water is, in fact, reduced to the pressure present in the flash tank 34, which is connected to and in pressure equilibrium with the low-pressure evaporator 27 (having a pressure of around 6 bar).

Therefore, the tainted water passes from a pressure of around 33 bar to a pressure of around 6 bar during passage through the valve 40.

The pressure drop undergone by the tainted water during passage through the regulating valve 40 causes rapid evaporation of the tainted water. In other words, the tainted water undergoes the so-called "flash" process and is converted partly into saturated dry steam at the pressure present in the flash tank 34 (equal to the pressure in the low-pressure evaporator 27) and partly into saturated water at the pressure present in the flash tank 34 (equal to the pressure in the low-pressure evaporator 27).

The quantity of steam which is produced during passage through the regulating valve 40 therefore increases the steam flow rate which develops in the low-pressure evaporator 27, with clear advantages. In the example described and shown here, the increase in flow rate of the steam which develops in the low-pressure evaporator causes an increase in the power produced by the steam turbine with the same consumption.

The part of saturated water which is collected by the flash tank 34 is channelled into the exhaust conduit 35, which connects the pressurised flash tank 34 to a sump 51.

The regulating valve 38, the flash tank 37 and the heat exchanger 36 are arranged in sequence along the exhaust conduit.

The flash tank 37 is connected with the outside environment and is therefore at a pressure equal to atmospheric pressure.

In conditions of saturation and at normal operating pressure of the low-pressure evaporator 27, the saturated water at the pressure present in the flash tank 34 (equal to the pressure in the low-pressure evaporator 27) undergoes a reduction in pressure during passage through the regulating valve 38. The pressure of the tainted water is, in fact, reduced to the value of atmospheric pressure present in the flash tank 37, which is connected to and in equilibrium with the outside environment.

Therefore, the tainted water passes from a pressure of around 6 bar to a pressure of around 1 bar during passage through the valve 38.

The pressure drop undergone by the tainted water during passage through the regulating valve 38 causes rapid evaporation of the tainted water. In other words, the tainted water undergoes the so-called "flash" process and is converted partly into saturated dry steam at the pressure present in the flash tank 37 (equal to atmospheric pressure) and partly into saturated water at the pressure present in the flash tank 37 (equal to atmospheric pressure).

The quantity of steam which is produced during passage through the regulating valve 38 is discharged into the atmosphere.

The heat exchanger 36 is configured to cool the saturated water collected by the flash tank 37, before discharging it into the sump 51, in compliance with current regulations on water emissions.

The quantity of water lost through discharge into the sump 51 must then be restored in the condenser 28, with demineralised water, by means of the water integration circuit 31 described above.

A variant (not shown) of the present invention envisages the draining circuit being configured not only to recover the thermal energy of the drained water, but also to recover the drained water and supply it to a cleaning device. The cleaning device is configured to clean the tainted water so as to make it reusable in the steam circuit. The presence of the water integration circuit 31 thus becomes superfluous and a considerable saving is obtained in terms of demineralised water consumption.

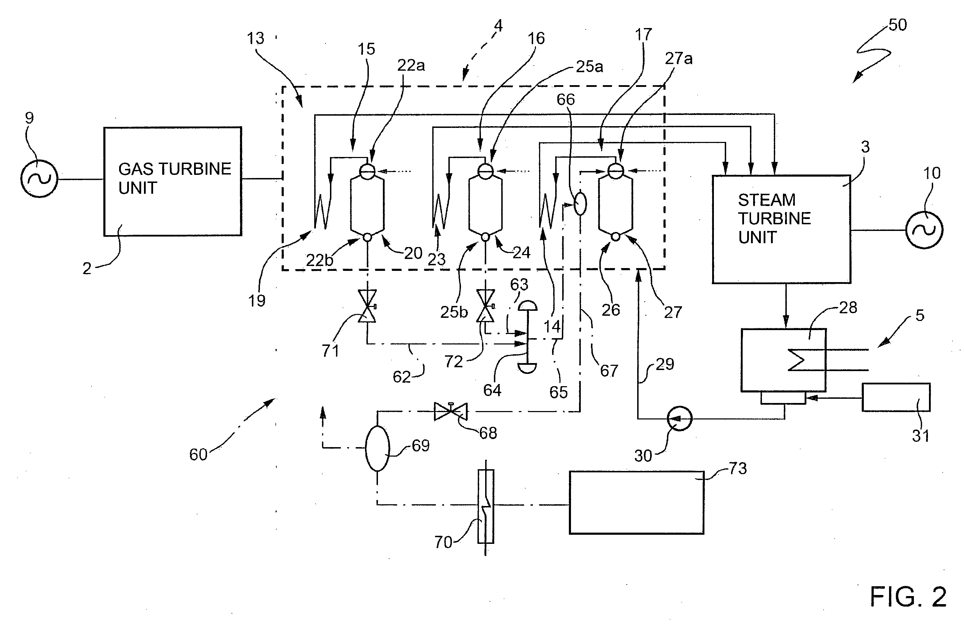

Figure 2 shows a plant 50 according to a second embodiment of the present invention, in which the same reference numbers of figure 1 are used to denote similar parts of the two embodiments.

In substance, the plant 50 according to the second embodiment comprises a draining circuit 60 having a different configuration with respect to the draining circuit 6 of the plant 1 of figure 1.

Like the draining circuit 6, the draining circuit 60 is configured to recover the thermal energy of the drained water.

The draining circuit 60 (represented in figure 2 with a dashed-dotted line) comprises a first draining branch 62, a second draining branch 63, a common conduit 64, a connecting branch 65, a flash tank 66, an exhaust conduit 67, a regulating valve 68, a flash tank 69, a heat exchanger 70 and a sump 73.

The first draining branch 62 connects the outlet 22b of the high-pressure evaporator 20 with the common conduit 64 and is equipped with a regulating valve 71.

The second draining branch 62 connects the outlet 25b of the medium-pressure evaporator 24 with the common conduit 64 and is equipped with a regulating valve 72.

The first draining branch 62 is connected to a respective analysis device (not shown in the appended figures), configured to analyse the composition of the water circulating in said evaporators.

The second draining branch 63 is connected to a respective analysis device (not shown in the appended figures), configured to analyse the composition of the water circulating in said evaporators.

The common conduit 64 is connected to the inlet 27a of the low-pressure evaporator 27 by means of the connecting channel 65, along which the flash tank 66 is arranged.

Preferably, the first draining branch 62 and the second draining branch 63 drain around 1% of the water circulating respectively in the high-pressure evaporator 20 and in the medium-pressure evaporator 24.

The tainted water drained from the high-pressure evaporator 20 and from the medium-pressure evaporator 24 undergoes a reduction in pressure during passage respectively in the regulating valves 71 and 72, similarly to what is described for valves 39 and 40 of the first embodiment.

The pressure on the common conduit 64 is, in fact, equal to the pressure of the flash tank 66, which is, in turn, in pressure equilibrium with the low-pressure evaporator 27 (with a pressure of around 6 bar).

Basically, the tainted water undergoes the so-called "flash" process and is converted partly into saturated dry steam at the pressure present in the flash tank 66 (equal to the pressure in the low-pressure evaporator 27) and partly into saturated water at the pressure present in the flash tank 66 (equal to the pressure in the cylindrical body of the low-pressure evaporator 27).

The steam thus generated is supplied directly to the boiler 4 and increases the flow rate of steam which develops in the low-pressure evaporator 27. In this manner, the power produced by the steam turbine unit 3 increases with the same consumption.

The part of saturated water which is collected by the flash tank 66 is channelled into the exhaust conduit 67, which connects the flash tank 66 to the sump 73.

The regulating valve 68, the flash tank 69 and the heat exchanger 70 are respectively arranged in sequence along the exhaust conduit 67.

The flash tank 69 is connected with the outside environment and is therefore at a pressure equal to atmospheric pressure.

In conditions of saturation and at normal operating pressure of the low-pressure evaporator 27, the saturated water at the pressure present in the flash tank 66 (equal to the pressure in the low-pressure evaporator 27) undergoes a reduction in pressure during passage through the regulating valve 68. The pressure of the tainted water is, in fact, reduced to the value of atmospheric pressure present in the flash tank 69, which is connected to and in equilibrium with the outside environment.

Therefore, the tainted water passes from a pressure of around 6 bar to a pressure of around 1 bar during passage through the valve 68.

The pressure drop undergone by the tainted water during passage through the regulating valve 68 causes rapid evaporation of the tainted water. In other words, the tainted water undergoes the so-called "flash" process and is converted partly into saturated dry steam at the pressure present in the flash tank 69 (equal to atmospheric pressure) and partly into saturated water at the pressure present in the flash tank 69 (equal to atmospheric pressure).

The quantity of steam which is produced during passage through the regulating valve 68 is discharged into the atmosphere.

The heat exchanger 70 is configured to cool the saturated water collected by the flash tank 69, before discharging it into the sump 73, in compliance with current regulations on water emissions.

The quantity of water lost through discharge into the sump 73 must then be restored in the condenser 28, with demineralised water, by means of the water integration circuit 31 described above.

A variant (not shown) of the present invention envisages the draining circuit being configured not only to recover the thermal energy of the drained water, but also to recover the drained water and supply it, at least in part, to a cleaning device. The cleaning device is configured to clean the tainted water so as to make it reusable in the steam circuit. The presence of the water integration circuit 31 thus becomes superfluous and a considerable saving is obtained in terms of demineralised water consumption.

Advantageously, the plant 1 and 50 according to the present invention is characterised by an increased efficiency with respect to plants of the known type.

In the plant 1, 50, according to the present invention, on the other hand, the draining circuit 6 and 60 is configured so as to recover the thermal energy of the tainted water drained from the boiler evaporators. Above all, a variant is envisaged in which the tainted water drained from the boiler evaporators is subsequently cleaned and made once again reusable to supply the boiler.

The plant 1, 50 according to the present invention is, in fact, configured so as to recover part of the heat removed from the evaporators of the boiler to control the salt content. Heat recovery occurs by transforming the drained water into steam, which will be supplied to the steam turbine to cause an increase in electric power.

According to a variant, subsequent treatment of the tainted water allows recovery of substantially all the water which would be discharged into the sumps.

It emerges from the calculations performed by the applicant that, for a continuous average drainage value of around 1% and for 400 MW plants, the increase in electric power which may be produced by the plant 1, 50 according to the present invention is around 150 kW, with a reduction of around 3 kJ/kWh in specific consumption.

This leads to a considerable increase in the annual revenues of the plant operator, quantifiable in tens of millions of Euro.

Above all, the dimensions of the water integration plant 31 configured to supply demineralised water to the boiler could be reduced, due to the fact that, during normal plant operation, the flow rate of the water to be supplied to the boiler is reduced by 80%.

A further advantage of the invention is being applicable to combined cycle plants, provided with different types of recovery boilers. For example, the invention is applicable to boilers with SH (Super-Heat) cycle or RH (Re-Heat) cycle, or to thermal cycles equipped with any cooling system (cooled-water condenser in an open or closed cycle on towers, air condenser, Heller type condenser, etc.) or also without a cooling system (such as plant for the production of electricity connected to desalination plants for the production of drinking water from sea water, for example).

The invention is also applicable on combined cycle plants provided with a recovery boiler having any number of evaporators or even provided with a recovery boiler with or without post-burners.

The invention is also applicable to combined cycle plants in which the steam turbine unit and the relative condensation system are not present. In this case, the steam produced is sent to the outside for industrial uses and must be totally restored in the form of water.

A further advantage of the invention is being applicable to combined cycle plants powered with any type of fuel.

In conclusion, it is clear that changes and variants may be made to the plant and method described here without deviating from the area of the appended claims.

## Claims

1. Combined cycle plant (1; 50) for energy production comprising:
- a gas turbine unit (2);
- an operating unit (3);
- a boiler (4) supplied with exhaust gas from the gas turbine unit (2) and configured to produce steam to be supplied to the operating unit (3); the boiler (4) comprising at least a first evaporator (20) at a first pressure level and at least a second evaporator (24) at a second pressure level lower than the first pressure level;
- a draining circuit (6; 60) configured to drain tainted water from the first evaporator (20) and/or the second evaporator (24); **characterized in that** the draining circuit (6; 60) is configured to convert, at least in part, the tainted water drained from the first evaporator (20) and/or the second evaporator (24) in steam and supply the produced steam directly to the boiler (4) in order to increase the steam produced by the boiler (4).

2. Plant according to Claim 1, wherein the draining circuit (6; 60) comprises regulating means (39, 40; 71, 72) configured to regulate the tainted water flow rate drained from at least the first evaporator (20) and/or the second evaporator (24).

3. Plant according to anyone of the previous claims, wherein the draining circuit (6; 60) comprises a first draining branch (32; 62) for draining tainted water from the first evaporator (20) and a first regulating valve (39; 71) arranged along the first draining branch (32; 62).

4. Plant according to claim 3, wherein the draining circuit (6; 60) comprises a second draining branch (33; 63) for draining tainted water from the second evaporator (24) and a second regulating valve (40; 72) arranged along the second draining branch (33; 63).

5. Plant according to claim 4, comprising a third evaporator (27) at a third pressure lower than the second pressure.

6. Plant according to claim 5, wherein the first draining branch (32) connects the first evaporator (20) to the second evaporator (20) and the second draining branch (33) connects the second evaporator (24) to the third evaporator (27); the second draining branch (33) comprising a first flash tank (34), arranged downstream of the second regulating valve (40) and configured to supply steam to the third evaporator (27)

7. Plant according to claim 5, wherein the draining circuit (60) comprises a common conduit (64), which is connected to the first draining branch (62) and to the second draining branch (63); the common conduit (64) being connected to the third evaporator (27) by means of a connecting channel (65) provided with a first flash tank (66) configured to supply steam to the third evaporator (27).

8. Plant according to claims 6 or 7, wherein the draining circuit (6; 60) comprises an exhaust conduit (35; 67), which connects the first flash tank (34; 66) to a sump (51; 73); the exhaust conduit (35) comprising a second flash tank (37; 69).

9. Plant according to anyone of the foregoing claims, comprising a cleaning device configured to clean the tainted water drained by the draining circuit (6; 60) so as to make said tainted water reusable in the combined cycle plant (1).

10. A method for operating a combined cycle plant (1; 50) for energy production; the plant (1; 50) comprising:
- a gas turbine unit (2);
- an operating unit (3);
- a boiler (4) supplied with exhaust gas from the gas turbine unit (2) and configured to produce steam to be supplied to the operating unit (3); the boiler (4) comprising at least a first evaporator (20) at first pressure level and at least a second evaporator (24) at a second pressure level lower than the first pressure level;
the method comprising the steps of:
- draining tainted water from the first evaporator (20) and/or the second evaporator (24) by means of a draining circuit (6; 60);
- converting, at least in part, the tainted water drained from the first evaporator (20) and/or the second evaporator (24) in steam; and
- supplying the produced steam directly to the boiler (4) in order to increase the steam produced by the boiler (4).

11. Method according to claim 10, wherein the step of draining tainted water comprises the step of cleaning the tainted water drained by the draining circuit (6; 60) by means of a cleaning device.

## Patentansprüche

1. Ein Kombikraftwerk (1; 50) zur Energieerzeugung, welches folgendes umfasst:
- eine Gasturbineneinheit (2);
- eine Betriebseinheit (3);
- einen Kessel (4), der mit Abgas von der Gasturbineneinheit (2) versorgt wird und dafür ausgelegt ist, Dampf zu erzeugen, der an die Betriebseinheit (3) ausgegeben wird, wobei der Kessel (4) mindestens einen ersten Verdampfer (20) auf einer ersten Druckstufe und mindestens einen zweiten Verdampfer (24) auf einer zweiten Druckstufe, welche niedriger als die erste Druckstufe ist, umfasst;
- einen Abflusskreislauf (6; 60), der dafür ausgelegt ist, Abwasser vom ersten Verdampfer (20) und / oder vom zweiten Verdampfer (24) ablaufen zu lassen;
**dadurch gekennzeichnet, dass** der Abflusskreislauf (6; 60) dafür ausgelegt ist, das vom ersten Verdampfer (20) und / oder vom zweiten Verdampfer (24) abgelassene Abwasser, zumindest zum Teil, in Dampf umzuwandeln und den erzeugten Dampf direkt dem Kessel (4) zuzuführen, um den vom Kessel (4) erzeugten Dampf zu vermehren.

2. Ein Kraftwerk nach Anspruch 1, worin der Abflusskreislauf (6; 60) Regelungsmittel (39, 40; 71, 72) umfasst, die dafür ausgelegt sind, des Durchfluss des von wenigstens dem ersten Verdampfer (20) und / oder vom zweiten Verdampfer (24) abgelassenen Abwassers zu regulieren.

3. Ein Kraftwerk nach einem der vorangehenden Ansprüche, worin der Abflusskreislauf (6; 60) einen ersten Abflusszweig (32; 62) zum Ablassen von Abwasser aus dem ersten Verdampfer (20) und ein erstes Regelungsventil (39; 71), welches entlang des ersten Abflusszweiges (32; 62) angeordnet ist, umfasst.

4. Ein Kraftwerk nach Anspruch 3, worin der Abflusskreislauf (6; 60) einen zweiten Abflusszweig (33; 63) zum Ablassen von Abwasser aus dem zweiten Verdampfer (24) und ein zweites Regelungsventil (40; 72), welches entlang des zweiten Abflusszweiges (33; 63) angeordnet ist, umfasst.

5. Ein Kraftwerk nach Anspruch 4, welches einen dritten Verdampfer (27) auf einer dritten Druckstufe umfasst, die niedriger als die zweite Druckstufe ist.

6. Ein Kraftwerk nach Anspruch 5, worin der erste Abflusszweig (32) den ersten Verdampfer (20) mit dem zweiten Verdampfer (24) verbindet und der zweite Abflusszweig (33) den zweiten Verdampfer (24) mit dem dritten Verdampfer (27) verbindet; wobei der zweite Abflusszweig (33) einen ersten Ablassentspanner (34) umfasst, der in der Fließrichtung nach dem zweiten Regelungsventil (40) angeordnet und dafür ausgelegt ist, dem dritten Verdampfer (27) Dampf zuzuführen.

7. Ein Kraftwerk nach Anspruch 5, worin der Abflusskreislauf (60) eine gemeinsame Leitung (64) umfasst, die mit dem ersten Abflusszweig (62) und dem zweiten Abflusszweig (63) verbunden ist, wobei die gemeinsame Leitung (64) mittels eines Verbindungskanals (65), der mit einem ersten Ablassentspanner (66) ausgestattet ist, mit dem dritten Verdampfer (27) verbunden ist, wobei der Ablassentspanner dafür ausgelegt ist, dem dritten Verdampfer (27) Dampf zuzuführen.

8. Ein Kraftwerk nach einem der Ansprüche 6 oder 7, worin der Abflusskreislauf (6; 60) eine Ablassleitung (35; 67) umfasst, welche den ersten Ablassentspanner (34; 66) mit einem Sumpf (51; 73) verbindet; wobei die Ablassleitung (35) einen zweiten Ablassentspanner (37; 69) umfasst.

9. Ein Kraftwerk nach einem der vorangehenden Ansprüche, welches eine Reinigungsvorrichtung umfasst, die dafür ausgelegt ist, das durch den Abflusskreislauf (6; 60) abgelassene Abwasser zu reinigen, um das Abwasser somit für das Kombikraftwerk (1) wieder brauchbar zu machen.

10. Ein Verfahren zum Betreiben eines Kombikraftwerkes (1; 50) zur Energieerzeugung, wobei das Kombikraftwerk (1; 50) folgendes umfasst:
- eine Gasturbineneinheit (2);
- eine Betriebseinheit (3);
- einen Kessel (4), der mit Abgas von der Gasturbineneinheit (2) versorgt wird und dafür ausgelegt ist, Dampf zu erzeugen, der an die Betriebseinheit (3) ausgegeben wird, wobei der Kessel (4) mindestens einen ersten Verdampfer (20) auf einer ersten Druckstufe und mindestens einen zweiten Verdampfer (24) auf einer zweiten Druckstufe, welche niedriger als die erste Druckstufe ist, umfasst;
wobei das Verfahren folgende Schritte umfasst:
- Ablassen des Abwassers von dem ersten Verdampfer (20) und / oder von dem zweiten Verdampfer (24) mittels eines Abflusskreislaufs (6; 60);
- Umwandeln, zumindest zum Teil, des von dem ersten Verdampfer (20) und / oder von dem zweiten Verdampfer (24) abgelassenen Abwassers in Dampf und
- Zuführen des erzeugten Dampfes direkt in den Kessel (4), um den vom Kessel (4) erzeugten Dampf zu vermehren.

11. Ein Verfahren nach Anspruch 10, worin der Schritt des Ablassens des Abwassers den Schritt der Reinigung des durch den Abflusskreislauf (6; 60) abgelassenen Abwassers mittels einer Reinigungsvorrichtung umfasst.

## Revendications

1. Centrale à cycle combiné (1; 50) pour la production d'énergie comprenant :
- une unité de turbine à gaz (2) ;
- une unité d'exploitation (3) ;
- une chaudière (4) alimentée en gaz d'échappement provenant de l'unité de turbine à gaz (2) et configurée pour produire de la vapeur à fournir à l'unité d'exploitation (3) ; la chaudière (4) comprenant au moins un premier évaporateur (20) à un premier niveau de pression et au moins un deuxième évaporateur (24) à un deuxième niveau de pression inférieur au premier niveau de pression ;
- un circuit d'évacuation (6 ; 60) configuré pour évacuer l'eau salie du premier évaporateur (20) et/ou du deuxième évaporateur (24) ; **caractérisée en ce que** le circuit d'évacuation (6; 60) est configuré pour convertir, au moins en partie, l'eau salie évacuée du premier évaporateur (20) et/ou du deuxième évaporateur (24) en vapeur et alimenter directement la chaudière (4) en vapeur produite afin d'augmenter la vapeur produite par la chaudière (4).

2. Centrale selon la revendication 1, dans laquelle le circuit d'évacuation (6 ; 60) comprend des moyens de régulation (39, 40 ; 71, 72) configurés pour réguler le débit d'eau salie évacuée au moins du premier évaporateur (20) et/ou du deuxième évaporateur (24).

3. Centrale selon l'une quelconque des revendications précédentes, dans laquelle le circuit d'évacuation (6; 60) comprend une première dérivation d'évacuation (32; 62) pour évacuer l'eau salie du premier évaporateur (20) et une première vanne de régulation (39 ; 71) agencée le long de la première dérivation d'évacuation (32 ; 62).

4. Centrale selon la revendication 3, dans laquelle le circuit d'évacuation (6 ; 60) comprend une seconde dérivation d'évacuation (33 ; 63) pour évacuer l'eau salie du deuxième évaporateur (24) et une seconde vanne de régulation (40 ; 72) agencée le long de la seconde dérivation d'évacuation (33 ; 63).

5. Centrale selon la revendication 4, comprenant un troisième évaporateur (27) à une troisième pression inférieure à la deuxième pression.

6. Centrale selon la revendication 5, dans laquelle la première dérivation d'évacuation (32) branche le premier évaporateur (20) au deuxième évaporateur (20) et la seconde dérivation d'évacuation (33) branche le deuxième évaporateur (24) au troisième évaporateur (27) ; la seconde dérivation d'évacuation (33) comprenant un premier réservoir de décompression (34), agencé en aval de la seconde vanne de régulation (40) et configuré pour alimenter le troisième évaporateur (27) en vapeur.

7. Centrale selon la revendication 5, dans laquelle le circuit d'évacuation (60) comprend une conduite commune (64), qui est branchée à la première dérivation d'évacuation (62) et à la seconde dérivation d'évacuation (63) ; la conduite commune (64) étant branchée au troisième évaporateur (27) au moyen d'un canal de branchement (65) pourvu d'un premier réservoir de décompression (66) configuré pour alimenter le troisième évaporateur (27) en vapeur.

8. Centrale selon les revendications 6 ou 7, dans laquelle le circuit d'évacuation (6 ; 60) comprend une conduite d'échappement (35 ; 67), qui branche le premier réservoir de décompression (34; 66) à un puisard (51 ; 73); la conduite d'échappement (35) comprenant un second réservoir de décompression (37; 69).

9. Centrale selon l'une quelconque des revendications précédentes, comprenant un dispositif de nettoyage configuré pour nettoyer l'eau salie évacuée par le circuit d'évacuation (6 ; 60) de façon à rendre réutilisable ladite eau salie dans la centrale à cycle combiné (1).

10. Procédé d'exploitation d'une centrale à cycle combiné (1; 50) pour la production d'énergie; la centrale (1; 50) comprenant :
- une unité de turbine à gaz (2) ;
- une unité d'exploitation (3) ;
- une chaudière (4) alimentée en gaz d'échappement provenant de l'unité de turbine à gaz (2) et configurée pour produire de la vapeur à fournir à l'unité d'exploitation (3) ; la chaudière (4) comprenant au moins un premier évaporateur (20) à un premier niveau de pression et au moins un deuxième évaporateur (24) à un deuxième niveau de pression inférieur au premier niveau de pression ;
le procédé comprenant les étapes:
- d'évacuation d'eau salie du premier évaporateur (20) et/ou du deuxième évaporateur (24) au moyen d'un circuit d'évacuation (6 ; 60) ;
- de conversion, au moins en partie, de l'eau salie évacuée du premier évaporateur (20) et/ou du deuxième évaporateur (24) en vapeur ; et
- d'alimentation directe de la chaudière (4) en vapeur produite afin d'augmenter la vapeur produite par la chaudière (4).

11. Procédé selon la revendication 10, dans lequel l'étape d'évacuation d'eau salie comprend l'étape de nettoyage de l'eau salie évacuée par le circuit d'évacuation (6 ; 60) au moyen d'un dispositif de nettoyage.
